## Europäisches Patentamt
## European Patent Office
## Office européen des brevets

(19)

(11) Publication number: **0 163 744**
**B1**

(12) **EUROPEAN PATENT SPECIFICATION**

(45) Date of publication of patent specification: **01.02.89**

(51) Int. Cl.⁴: **F 24 C 7/08** // H05B6/76, H01R17/04

(21) Application number: **84904172.8**

(22) Date of filing: **16.11.84**

(86) International application number:
**PCT/JP84/00551**

(87) International publication number:
**WO 85/02456 06.06.85 Gazette 85/13**

(54) **APPARATUS FOR ROTATABLY SUPPORTING TEMPERATURE PROBE.**

(30) Priority: **22.11.83 JP 219816/83**
**04.06.84 JP 114971/84**
**07.06.84 JP 116964/84**

(43) Date of publication of application:
**11.12.85 Bulletin 85/50**

(45) Publication of the grant of the patent:
**01.02.89 Bulletin 89/05**

(84) Designated Contracting States:
**DE FR GB SE**

(56) References cited:
**DE-A-3 427 261**
**FR-A-2 351 397**
**GB-A-2 128 420**
**JP-A-55 053 643**
**JP-U-54 155 759**
**JP-U-56 035 784**
**JP-U-56 136 208**
**JP-Y-43 026 846**
**US-A-3 408 610**
**US-A-3 957 331**

(73) Proprietor: **Matsushita Electric Industrial Co., Ltd.**
**1006, Oaza Kadoma**
**Kadoma-shi Osaka-fu, 571 (JP)**

(72) Inventor: **GONOH, Akira**
**4-21, Minamikamodai 10-chome**
**Kamocho, Soraku-gun Kyoto (JP)**
Inventor: **MASUBUCHI, Toshio**
**109-12, Miyado-cho**
**Yamatokoriyama-shi Nara-ken 639-11 (JP)**

(74) Representative: **Patentanwälte Leinweber & Zimmermann**
**Rosental 7/II Aufg.**
**D-8000 München 2 (DE)**

## Description

The present invention relates to a heating apparatus, particularly a high-frequency heating apparatus having an oven chamber with wall surfaces; a turntable disposed within said oven chamber for supporting food placed thereon; and a device for rotatably supporting a temperature probe disposed in said oven chamber, said probe having a plug at one end thereof and having another end for insertion into the food for detecting the temperature thereof, said device comprising a socket section having a body with means for securing said socket section to one of the wall surfaces of the oven chamber, said socket section further including contact means nonrotatably supported by said body and arranged for rotatably and disengageably supporting said plug, said contact means receiving signals from said temperature probe through said plug.

A heating apparatus of this type is disclosed in FR—A—2 351 397. In this prior art heating apparatus the socket section of the device for rotatably supporting a temperature probe is closed by a part made of an insulating material such as resin. This part serves for supporting contact pieces extending therethrough. There is a risk however that vapor contained in the socket is condensed at inner surface of this part forming waterdrops. These waterdrops can randomly fall onto the contact pieces and cause corrosion thereof which has an adverse influence on the electric conductivity.

The object of the invention is to provide a heating apparatus of the type mentioned above in which the contact means are prevented from waterdrops caused by dew condensation.

A heating apparatus satisfying this requirement is characterized in that said body has a top part with a vapor hole formed therein, and that a shielding member is arranged above said vapor hole for preventing water drops, comprising condensation of vapor ascending through said vapor hole from falling back through said vapor hole.

Vapor entering into the socket section is discharged through the vapor hole whereby dew condensation of such vapor within the socket is prevented.

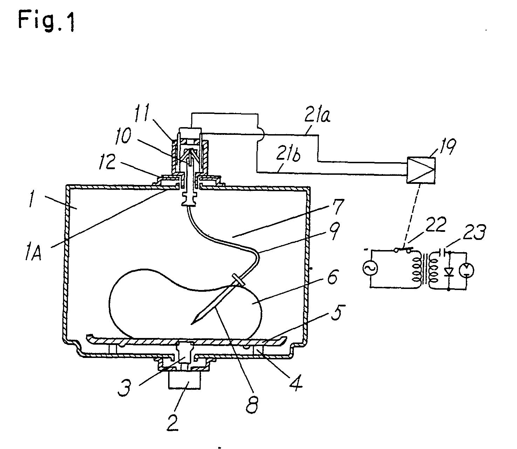

The invention will now be described in more detail with reference to an exemplifying, nonlimiting embodiment thereof illustrated in the accompanying drawings, in which Fig. 1 is a schematic view of a temperature probe — equipped high-frequency heating apparatus having a device for rotating and supporting a temperature probe in accordance with the present invention.

Fig. 2 is a perspective and exploded view of the probe rotating and supporting device of the present invention.

Fig. 3 is a section view of the probe rotating and supporting device of the present invention into which a plug is inserted.

Fig. 4 is a similar view to Fig 3. with the view position changed by 90°.

Fig. 5 is a section view of the apparatus in Fig. 1 used as a microwave oven.

Fig. 6 is a section view of a high-frequency heating apparatus including another example of a dew condensation preventive means.

Best Form to Practice the Present Invention

The following description will discuss one embodiment of the present invention with reference to the attached drawings.

Fig. 1 is a schematic view of a temperature probe-equipped high-frequency heating apparatus having a device for rotating and supporting a temperature probe in accordance with the present invention.

A motor 2 is disposed at the bottom of an oven chamber 1. A turntable 5 supported on rollers 4 is rotatable by the motor 2 through a rotary shaft 3. Food 6 placed on the turntable 5 is heated by microwaves.

With a temperature detector means 8 of a temperature probe 7 inserted into the food 6, temperature data as electric signals are transmitted to a magnetron control circuit 19 through a cable 9 and a plug 10.

A device or jack 11 for rotating and supporting the temperature probe 7 is screw-fixed, through a mounting plate 20, to an oven top plate 1A at or adjacent its center corresponding to the center of the turntable 5. To the jack 11, the plug 10 of the temperature probe 7 is connected mechanically and electrically such that the electric signals above-mentioned are transmitted to signal lines 21a and 21b.

When the temperature of the food 6 reaches a predetermined finish temperature with heating by microwaves, the magnetron control circuit 19 opens a switch 22 to shut off supply of power to a magnetron power circuit 23, thus stopping the operation of the high-frequency heating apparatus.

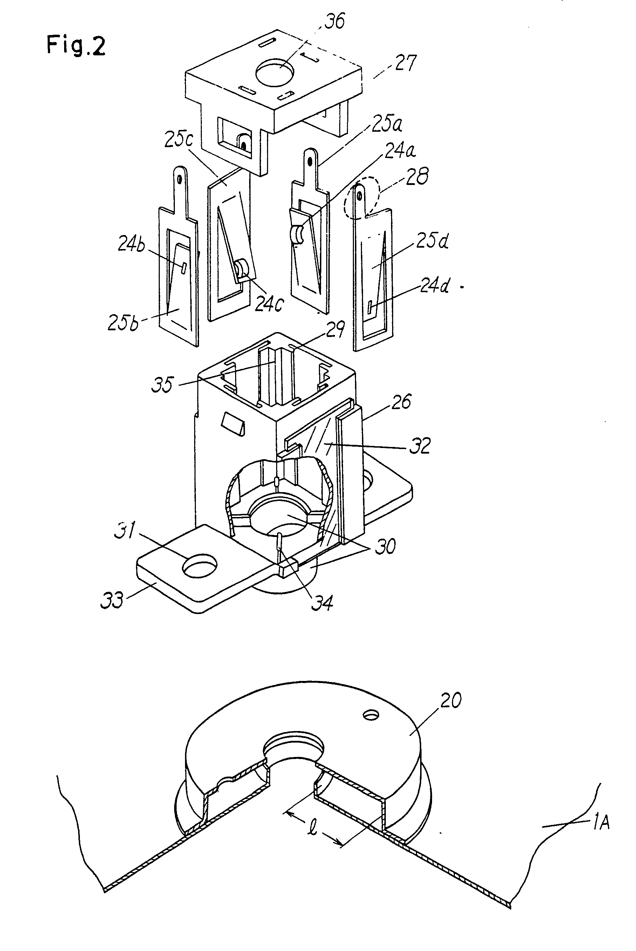

The following description will discuss the probe rotating and supporting device or jack 11 with reference to Fig. 2.

The probe rotating and supporting device 11 includes four contact pieces 25a, 25b, 25c and 25d respectively having contact portions 24a, 24b, 24c and 25d, a body 26 for fixing these contact pieces 25a, 25b, 25c and 25d, and a body cap 27 for preventing these contact pieces 25a-d from coming out.

The contact pieces are constituted by the contact pieces 25a and 25b at the measuring terminal side, and the contact pieces 25c and 25d at the grounding side. The grounding line is connected to the jack 11 through a printed circuit board for a control circuit (not shown).

Each of the contact pieces 25a, 25b, 25c and 25d is cut at the center portion thereof into a substantially U shape. The cut portions are inwardly turned to provide resiliency. Semispherical contact portions 24a, 24b, 24c and 24d made of a soft and conductive material such as copper are attached to the tips of the cut portions by calking or the like. The contact pieces 25a, 25b, 25c and 25d have projecting portions 28 as electric output portions.

The body 26 made of a non-metallic material such as resin is opened at its top, and has in its inner four faces, grooves 29 for fixing the contact pieces 25a-d. The body 26 has at its lower portion a sleeve 30 and a metallic plate 33 which has holes 31 and T-shape plates 32 for fixing the body 26. The sleeve 30 is made of a soft and conductive material, such as copper, impregnated with vegetable oil, and is attached to the metallic plate 33 by calking or the like. By the inner surface of the sleeve 30, the plug 10 of the temperature probe 7 is supported such that the inclination of the plug 10 during rotation is restrained.

In order to provide insulation distances between the contact pieces having different polarities, there are disposed four radial insulation walls 34 around the sleeve 30 and insulation walls 35 projecting from the inner four corners of the body 26. Such insulation walls 34 and 35 prevent dew condensation of vapor, thereby to prevent the contact pieces having different polarities from being short-circuited. The body cap 27 has in its center a vapor hole 36 having a diameter of about 6—10 mm.

A temperature probe mounting metal 20 is spot-welded to the oven top plate 1A. The size l of the space formed by the mounting metal 20 and the oven top plate 1A is about 1/4 of the wave length of a high-frequency electric wave. It is to be noted that the safety standards as to the leak amount of electric wave are satisfied even though such size l is other than 1/4 of the wave length of high-frequency electric wave.

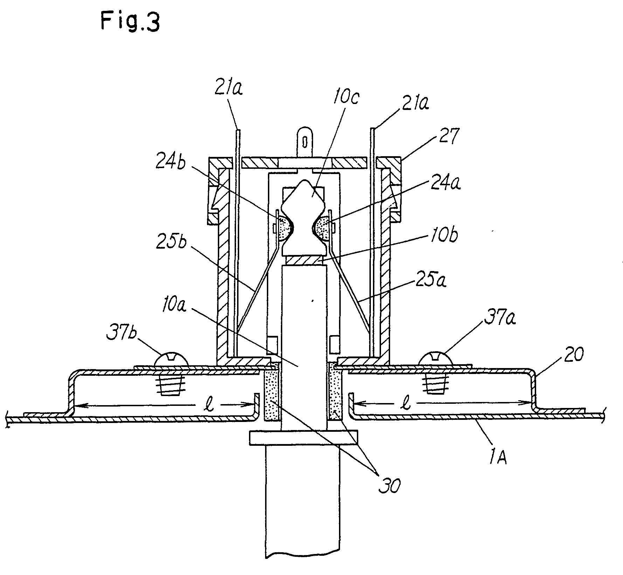

Fig. 3 is a section view of the jack 11 mounted to the oven top plate 1A through screws 37a and 37b with the plug 10 of the temperature probe 7 inserted into the jack 11. In Fig. 3, the contact pieces 25a and 25b at the measuring terminal side are shown. The plug 10 has a conductor 10a (at the grounding side), an insulator 10b and a tip conductor 10c (at the measuring terminal side).

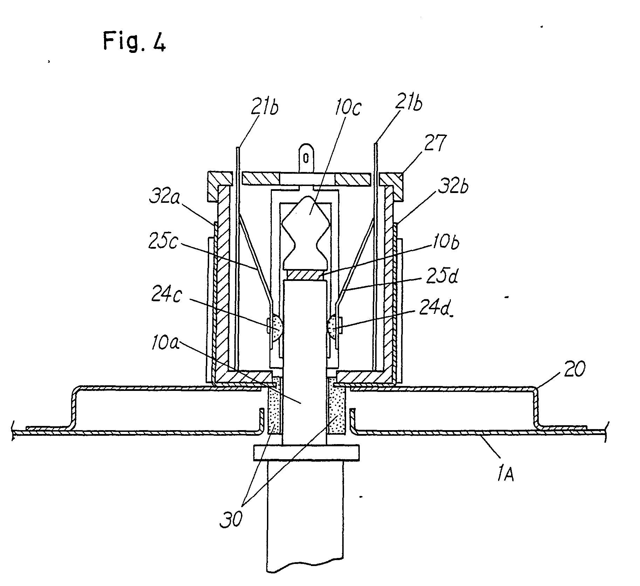

Fig. 4 is a similar view to Fig. 3 with the view position changed by 90°. The following description will be made with reference to Figs. 3 and 4.

The contact portions 24a and 24b of the contact pieces 25a and 25b at the measuring terminal side resiliently engage and are pressingly contacted with the concave portion of the tip conductor 10c so as to mechanically hold the plug 10. At the same time, the contact portions 24c and 24d of the contact pieces 25c and 25d at the grounding side resiliently engage and are pressingly contacted with the conductor 10a of the plug 10. With the plug 10 attached to the jack 11, the temperature probe 7 is hung down from the oven top plate 1A.

Accordingly, when food 6 placed on the turntable 5 is rotated, the plug 10 of the temperature probe 7 is smoothly rotated together with the food 6 even though the cable 9 of the temperature probe 7 tends to be twisted. Thus, there is no risk that the cable 9 is actually twisted. Correct temperature data are therefore transmitted to the electric signal lines 21a and 21b.

The contact portions 24a-d and the sleeve 30 are made of a soft and conductive material such as copper. Therefore, when the plug 10 is rotated, the rotary contact portions are not damaged to assure a smooth rotation of the plug 10.

Two contact portions at each of the measuring terminal side and the grounding side are located at opposite positions to hold the plug 10. While the plug 10 is rotatingly contacted with the contact portions, electric signals which are always stable, are transmitted directly from the plug 10. Two contact portions at each of the measuring terminal side and the grounding side are always in contact with the plug 10 by a resilient pressing force. Even if contact of one of these two contact portions with the plug is momentarily insufficient due to dirt or dust, the other is contacted with the plug, so that electric output can be stably taken out.

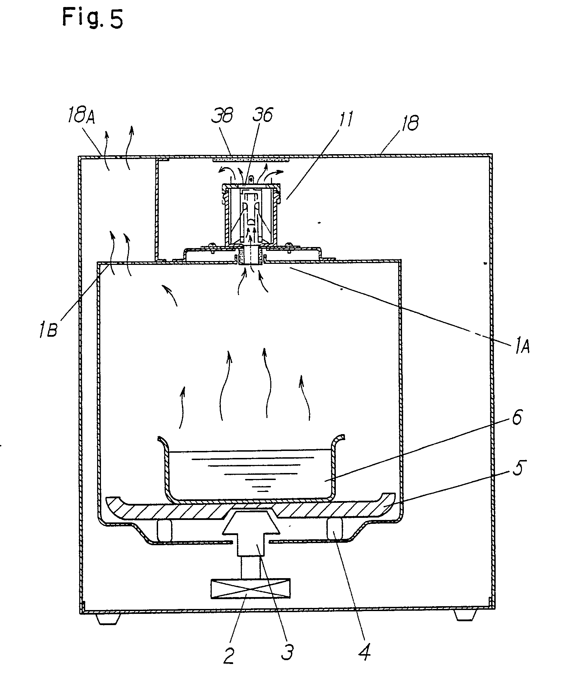

Fig. 5 is a section view of the high-frequency heating apparatus having the probe rotating and supporting device 11, when it is used as a microwave oven.

A heat conductive plate 38 is disposed above the vapor hole 36 in the body cap 27 of the jack body 26.

When the high-frequency heating apparatus is used with the temperature probe being not used, the probe rotating and supporting device 11 is exposed directly to vapor, oil or food stock generated from a heated food in the heating chamber. However, vapor entering into the device 11 through the sleeve 30 is discharged to the outside after having passed through the vapor hole 36 in the body cap 27 at its center portion, thereby to restrain dew condensation of such vapor.

Even if vapor is condensed in the probe rotating and supporting device 11, the insulation walls 34 and 35 separate such condensed waterdrops from the contact pieces, thereby to prevent the contact pieces having different polarities from being short-circuited.

Moreover, when the plug 10 is inserted, contamination of the contact portions 24a-d may be scraped off. Stable electric signals are thus taken out at all times.

When vapor discharged to the outside of the oven chamber 1 strikes directly against the body 18, such vapor is converted into waterdrops due to temperature difference. Such waterdrops then fall on the probe rotating and supporting device 11 or in the oven chamber 1 through the vapor hole 36. According to the present invention, however, provision of the heat conductive plate 38 prevents such vapor from being condensed, thus eliminating the inconvenience above-mentioned.

Instead of the heat conductive plate 38, a vapor absorbing material such as cushion rubber may be used. With the use of such vapor absorbing material, stable electric output may be taken out at all times.

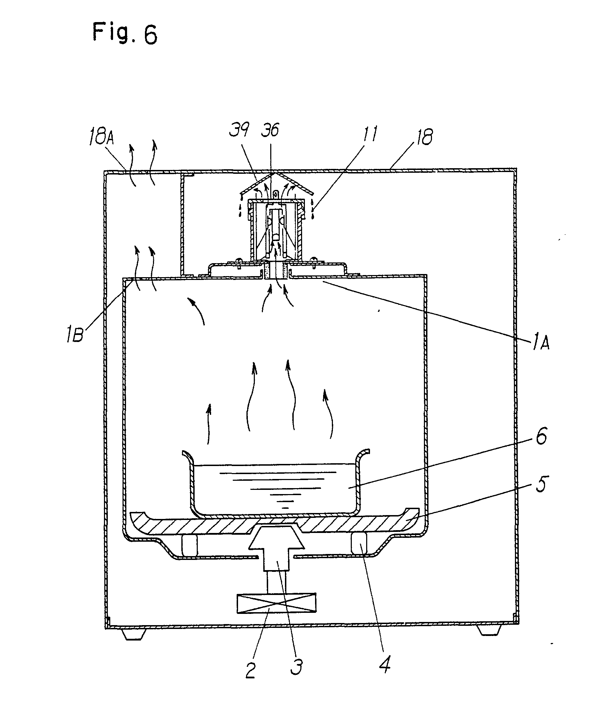

Fig. 6 is another example of a dew condensation preventive arrangement in which a dew condensation member 39 of the cone shape is disposed on the probe rotating and supporting device 11.

When vapor discharged through the vapor hole 36 of the probe rotating and supporting device 11 strikes against the body 18, such vapor is condensed to be converted into waterdrops due to temperature difference. Such waterdrops fall on the probe rotating and supporting device 11 or in the oven chamber 1 through the vapor hole 36. When such waterdrops fall in the oven chamber 1, the waterdrops strike against the contact portions 24a-d and are therefore accumulated in the probe rotating and supporting device 11. According to the present invention, however, vapor discharged through the vapor hole 36 is condensed at the cone-shape dew condensation member 39 disposed above the probe rotating and supporting device 11, the size of the member 39 being larger than that of the probe rotating and supporting device 11. Waterdrops thus converted from the vapor flow along the peripheral edge of the cone-shape member 39 and then fall on the oven top plate 1A. Thus, no waterdrops fall in the probe rotating and supporting device 11. Therefore, the output portions 28 are not electrically conducted by waterdrops, thus eliminating the risk of malfunction.

The mounting metal 20 and the oven top plate 1A form a choke circuit, and connection between the temperature probe 7 and the sleeve 30 of the jack 11 is made in metal. Thus, the high-frequency heating apparatus in accordance with the present invention may be safely used without any leakage of electric waves in the oven chamber 1.

As thus discussed hereinbefore, according to the device for rotating and supporting a temperature probe of the present invention, the plug 10 of the temperature probe 7 may be attached to or removed from the oven chamber 1. When food 6 is rotated by the turntable, the plug 10 itself may be rotated together with the food 6.

(1) Two contact portions at each of the measuring terminal side and the grounding side are located at plural positions which are opposed to each other, and are contacted with the plug by a resilient pressing force, thus permitting transmission of signals stable at all times.

(2) The vapor hole in the body cap permits vapor to be discharged to the outside, thus restraining contamination and dew condensation.

(3) Even if vapor is condensed, insulation walls disposed in the jack body prevents the contact pieces having different polarities from being short-circuited.

(4) Vapor discharged to the outside through the vapor hole in the body cap, is absorbed by the heat conductive plate, thereby to prevent dew condensation. Thus, no waterdrops fall in the probe rotating and supporting device.

(5) Electric signals are taken out directly from the plug. Thus, a predetermined function is achieved with a simple construction, thereby to form the apparatus in a small size. Economical production is thus made.

Industrial Utility

As thus discussed hereinbefore, the present invention provides a highly reliable device for rotating and supporting a temperature probe to be used in a high-frequency heating apparatus, which assures rotation of the probe plug with a simple construction and eliminates malfunction resulted from dirt such as vapor, oil or food stock generated from a heated food.

Claims

1. A heating apparatus, particularly a high-frequency heating apparatus having an oven chamber (1) with wall surfaces; a turntable (5) disposed within said oven chamber (1) for supporting food placed thereon; and a device (11) for rotatably supporting a temperature probe (7) disposed in said oven chamber (1), said probe (7) having a plug (10) at one end thereof and having another end for insertion into the food (6) for detecting the temperature thereof, said device comprising a socket section having a body (26) with means (31, 33) for securing said socket section to one of the wall surfaces (1A) of the oven chamber (1), said socket section further including contact means (24, 25) non-rotatably supported by said body and arranged for rotatably and disengageably supporting said plug (10), said contact means (24, 25) receiving signals from said temperature probe (11) through said plug (10), characterized in that said body (26) has a top part (27) with a vapor hole (36) formed therein, and that a shielding member (38, 39) is arranged above said vapor hole (36) for preventing water drops, comprising condensation of vapor ascending through said vapor hole (36) from falling back through said vapor hole.

2. A heating apparatus as set forth in claim 1, wherein said shielding member (39) has an inner conical surface entirely covering said socket section arranged therebelow, so that water droplets formed by condensation on said inner conical surface run down said inner conical surface and fall outside the area occupied by said socket section.

3. A heating apparataus as set forth in claim 1, wherein said shielding member (38) comprises a vapor absorbing material.

Patentansprüche

1. Herd, insbesondere Mikrowellenherd mit einer Wandflächen aufweisenden Herdkammer (1); einem in der Herdkammer (1) angeordneten Drehteller (5) zum Abstützen einer darauf angeordneten Speise; und einer Einrichtung (11) zum drehbaren Abstützen eines Temperaturfühlers (7), der in der Herdkammer (1) angeordnet ist, wobei der Fühler (7) an einem Ende einen Stopfen (10) aufweist und ein anderes Ende zum Einführen in die Speise (6) aufweist, um deren Temperatur zu ermitteln, wobei die Einrichtung umfaßt; einen Buchsenabschnitt, der einen Körper (26) mit Mitteln (31, 33) zum Befestigen des Buchsenabschnitts an einer der Wandflächen (1A) der Herdkammer (1) aufweist, wobei der Buchsenabschnitt ferner Kontaktmittel (24, 25) aufweist, die durch diesen Körper drehfest abgestützt und zum verdrehbaren und lösbaren Abstützen des Stopfens (10) angeordnet sind, wobei diese Kontaktmittel (24, 25) über den Stopfen (10) Signale von dem Temperaturfühler (11) empfangen, dadurch gekennzeichnet, daß der Körper (26) ein Oberteil (27) hat, in dem eine Dampföffnung (36) ausgeformt ist, und daß ein Abschirmteil (38; 39) über der Dampföffnung (36) angeordnet ist um Wassertröpfchen, die durch Kondensation des durch die Dampföffnung (36) aufsteigenden Dampfes gebildet sind, daran zu hindern, durch diese Dampföffnung zurückzufallen.

2. Herd nach Anspruch 1, wobei das Abschirmteil (39) eine konische Innenfläche hat, die den darunter angeordneten Buchsenabschnitt vollständig bedeckt, so daß durch Kondensation an der konischen Innenfläche gebildete Wassertröpfchen an dieser konischen Innenfläche nach unten laufen und außerhalb des von dem Buchsenabschnitt eingenommenen Bereichs abfallen.

3. Herd nach Anspruch 1, wobei das Abschirmteil (38) ein Wasserdampf absorbierendes Material umfaßt.

**Revendications**

1. Appareil de chauffage, en particulier appareil de chauffage à haute fréquence comportant une chambre formant four (1) avec des surfaces formant parois; un plateau tournant (5) disposé dans ladite chambre (1) pour supporter un aliment placé sur le plateau; et un dispositif (11) destiné à supporter en rotation une sonde de température (7) disposée dans ladite chambre (1), ladite sonde (7) comportant une fiche (10) à une de ses extrémités et son autre extrémité étant prévue pout l'insertion dans l'aliment (6) pour détecter sa température, ledit dispositif comportant une douille ayant un corps (26) muni de moyens (31, 33) destinés à fixer ladite douille à l'une des surfaces formant paroi (1A) de la chambre formant four (1), ladite douille comportant en outre des moyens de contact (24, 25) supportés en non-rotation par ledit corps et disposés pour supporter ladite fiche (10) en rotation et de façon amovible, lesdits moyens de contact (24, 25) recevant des signaux provenant de ladite sonde de température (11) par l'intermédiaire de ladite fiche (10), caractérisé en ce que ledit corps (26) a une partie supérieure (27) dans laquelle est pratiquée un trou à vapeur (36) et qu'un organe de protection (38, 39) est prévu au dessus du trou à vapeur (36) pour empêcher les gouttes d'eau, provenant de la condensation de la vapeur montant par ledit trou à vapeur (36), de retomber par ledit trou à vapeur.

2. Appareil de chauffage selon la revendication 1, dans lequel ledit organe de protection (39) a une surface intérieure conique recouvrant totalement ladite douille disposée en dessous, de sorte que les gouttelettes d'eau formées par condensation sur ladite surface intérieure conique descendent le long de ladite surface intérieure conique et tombent à l'extérieur de la superficie occupée par ladite douille.

3. Appareil de chauffage selon la revendication 1, dans lequel ledit organe de protection (38) comprend un matériau absorbant la vapeur.

Fig.1

Fig.2

36

27

25c

25a

24a

28

24b

25d

25b

24c

24d

29

35

26

32

31

30

33

34

20

ℓ

1A

# Fig.3

Fig. 4

## Fig. 5

## Fig. 6